# EUROPÄISCHE PATENTSCHRIFT

(11) **EP 1 902 235 B1**
(45) Veröffentlichungstag und Bekanntmachung des Hinweises auf die Patenterteilung: **26.01.2011**
(21) Anmeldenummer: 06762058.3
(22) Anmeldetag: 16.06.2006
(51) Int. Cl.: F16H 7/12, F16C 33/74, F16C 11/04, F16J 15/34

(54) **ABDICHTUNG FÜR DAS LAGERAUGE EINES SPANNSYSTEMS**
SEAL FOR A CLAMPING SYSTEM BEARING LUG
JOINT POUR BOSSAGE DE SUPPORT D'UN SYSTEME DE SERRAGE

(30) Priorität: 06.07.2005 DE 102005031593
(43) Veröffentlichungstag der Anmeldung: 26.03.2008
(73) Patentinhaber: Schaeffler Technologies GmbH & Co. KG, 91074 Herzogenaurach (DE)
(72) Erfinder: PETRI, Werner, 91058 Erlangen (DE)
(86) Internationale Anmeldenummer: PCT/EP2006/005773
(87) Internationale Veröffentlichungsnummer: WO 2007/003262

(56) Entgegenhaltungen:
- DE-A1- 3 809 169
- US-A- 4 923 435
- US-A- 5 803 850

## Beschreibung

### Gebiet der Erfindung

Gegenstand der Erfindung ist ein Lagerauge für ein in Zugmitteltrieben eingesetztes Spannsystem. Das Lagerauge ist dabei einstückig mit einem Schwenkhebel verbunden, der am freien Ende eine drehbar angeordnete Laufrolle einschließt. Im Einbauzustand ist die Laufrolle kraftschlüssig an einem Zugmittel, insbesondere einem Riemen des Zugmitteltriebs abgestützt. Der Aufbau sieht weiterhin vor, dass das Lagerauge gegenüber einem ortsfesten, in einer Längsbohrung des Lagerauges geführten Befestigungsmittel drehbar ist. Dazu ist in einem von einer Innenwandung der Längsbohrung und einer Mantelfläche des Befestigungsmittels radial begrenzten Ringspalt ein als Lagerbuchse ausgelegtes Radiallager eingesetzt. Zur Abdichtung weist der Ringspalt beidseitig ein Dichtelement auf.

### Hintergrund der Erfindung

Die DE 38 09 169 A1 offenbart ein Lagerauge nach dem Oberbegriff des Anspruchs 1, das an einem ortsfesten Maschinenteil, dem Gehäuse einer Brennkraftmaschine befestigt ist. Dazu ist durch die Längsbohrung des Lagerauges eine Schraube geführt, die in eine zugehörige Gewindebohrung des Motorblocks eingeschraubt ist. Die Axialanschläge im Bereich des Lagerauges werden dabei einerseits durch den Motorblock und andererseits durch den Schraubenkopf der Befestigungsschraube gebildet. Zur Abdichtung eines sich zwischen der Befestigungsschraube und der Bohrung des Lagerauges einstellenden Ringspaltes sind beidseitig als O-Ringe ausgebildete Dichtungen vorgesehen. Derartige Abdichtungen ermöglichen nachteilig keinen Toleranzausgleich aufgrund ihrer relativ hohen Steifigkeit. Das führt zu einem relativ hohen Dichtungs-Reibmoment der O-Ringdichtungen, die mit einer hohen Einpresskraft in die dazu vorgesehenen Ringnuten eingesetzt sind. Andererseits bewirkt eine verringerte Einpresskraft die Gefahr einer Undichtigkeit, insbesondere bei einer ungünstigen Toleranzlage zwischen den Anschlussteilen. Weiterhin bekannte sogenannte Schaumringe als Dichtelemente verursachen ein geringes Reibmoment, sind jedoch bei einer starken Schmutzeinwirkung nicht ausreichend dicht.

In der DE 197 43 480 A1 ist ein Lagerauge mit einer drehfest in einer Gehäuseaufnahme eingesetzten Lagerbuchse offenbart, in der zentrisch, spielbehaftet eine innere Buchse eingesetzt ist. Mit einer als Befestigungsmittel ausgeführten Schraube, auf der die innere Buchse geführt ist, wird das Lagerauge und damit die Spannvorrichtung an einem ortsfesten Bauteil lagefixiert. Ein sich zwischen der Mantelfläche der inneren Buchse und der Lagerbuchse bildender Ringspalt weist dabei keine seitliche Abdichtung auf. Verunreinigungen jeglicher Art sowie Feuchtigkeit können folglich ungehindert in den Ringspalt eintreten, was zu einem erhöhten Verschleiß insbesondere im Bereich der Kontaktzone führt. Verschleißbedingt vergrößert sich gleichzeitig das Radialspiel, was sich nachteilig auf die Funktion des Spannsystems auswirkt und was gleichzeitig zu einer nachteiligen Geräuschentwicklung führt.

### Zusammenfassung der Erfindung

Zur Vermeidung von Nachteilen der bekannten Lösungen ist es Aufgabe der Erfindung, ein Lagerauge mit einem Dichtelement zu realisieren, das einen Ausgleich bei ungünstigen Toleranzen ermöglicht, sowie ein geringes Dichtungs-Reibmoment aufweist. Weiterhin ist ein kostengünstiges, vereinfacht montierbares Dichtelement erforderlich.

Diese Problemstellung wird erfindungsgemäß durch die Merkmale des Anspruchs 1 gelöst. Gemäß der Erfindung ist zur wirksamen Abdichtung des sich bildenden Ringspaltes beidseitig des Lagerauges ein hochelastisches, zumindest zwei Dichtlippen einschließendes, in einem rechteckförmig gestalteten Einbauraum des Lagerauges integriertes Dichtelement vorgesehen. Das Dichtelement umfasst von einem Dichtrücken ausgehend, zwei entgegengesetzt gespreizte Dichtlippen, wobei der Dichtrücken des Dichtelementes auf der Mantelfläche des Trägerteils positioniert ist und deren radial ausgerichtete Dichtlippen an der Stützscheibe bzw. einer Wandung des Einbauraums abgestützt sind. Durch eine Einbaulage des Dichtelementes, bei der sich die Dichtlippen in Richtung der größten Seitenlänge des rechteckförmigen Einbauraums ausgerichtet sind, ermöglicht eine gewünschte große Dichtlippenlänge, wodurch eine gewünschte, hochelastische, flexible Dichtung realisierbar ist. Die große Länge der einzelnen Dichtlippen gewährleistet dabei einen größeren Toleranzausgleich gegenüber den Anschlussteilen, d. h. dem ortsfest angeordneten Bauteil sowie einem schwenkbaren Bauteil im Bereich der Kontaktflächen. Die länger gestalteten Dichtlippen ermöglichen außerdem die Ausbildung definierter Dichtkanten, was sich ebenfalls günstig auf das gewünschte niedrige Dichtungsreibmoment auswirkt. Ein weiterer Vorteil des erfindungsgemäßen Dichtkonzeptes besteht darin, dass die lang ausgeführten Dichtlippen des Dichtelementes ein beispielsweise toleranzbedingtes großes Lagerspiel des Lagerauges kompensieren, ohne nachteiligen Einfluss auf die Dichtwirkung.

Der Aufbau des erfindungsgemäßen Dichtelementes sieht weiterhin vor, dass dieses von einem Dichtrücken ausgehend, zwei entgegengesetzt gespreizte Dichtlippen einschließt, die im Einbauzustand des Dichtelementes an zwei zueinander parallel angeordneten Dichtflächen, eines ortsfesten und schwenkbaren Bauteils des Lagerauges dichtend abgestützt sind. Die Gestaltung der Dichtlippen des erfindungsgemäßen Dichtelementes sieht weiterhin eine Länge L der Dichtlippen vor, die eine Breite B des Dichtrückens von dem Dichtelement um den Faktor ≥ 1,2 übertrifft. Dieses Maßverhältnis verbessert die gewünschte hohe Elastizität der Dichtlippen, wodurch sich ein verbesserter Toleranzausgleich in Verbindung mit einem geringen Dichtungsreibmoment einstellt.

Vorteilhafte Ausgestaltungen der Erfindung sind Gegenstand der abhängigen Ansprüche 2 bis 9.

Eine bevorzugte Ausgestaltung des Lagerauges umfasst ein rohrförmig ausgebildetes Trägerteil, in dem das Befestigungsmittel, bevorzugt eine Maschinenschraube eingesetzt ist. Die Breite des Trägerteils übertrifft dabei vorteilhaft die Breite des Lagerauges um ein Maß, wodurch das Trägerteil jeweils beidseitig des Lagerauges die Aufnahme einer Stützscheibe ermöglicht. Die beispielsweise formschlüssig und / oder stoffschlüssig mit dem Trägerteil verbundenen Stützscheiben erstrecken sich radial über den Ringspalt des Lagerauges sowie über die für die Aufnahme des Dichtmittels stirnseitig in dem Lagerauge eingebrachte Ausnehmung. Die Stützscheiben schaffen damit im vormontierten Zustand des Spannsystems eine verliergesicherte Anordnung des Trägerteils, einschließlich des im Lagerauge integrierten Radiallagers sowie der Dichtelemente. Andererseits gewährleisten die Stützscheiben einen wirksamen Schutz der Dichtelemente, indem diese den Einbauraum der Dichtelemente vollständig überdecken.

Das Lagerauge weist jeweils stirnseitig in einer Übergangszone zwischen der Längsbohrung und der Stirnseite eine umlaufende Ausnehmung auf, die für die Aufnahme des Dichtelementes bestimmt ist. Die Ausnehmung kann beispielsweise durch eine spanende Bearbeitung, mittels Fräsen oder Drehen in die Stirnseite des Lagerauges eingebracht werden, wodurch eine stufenartige Kontur entsteht, in der das Dichtelement lagepositioniert ist.

In vorteilhafter Weise kann das erfindungsgemäße Dichtelement in unterschiedlichen Lagen positioniert werden. In einer ersten Einbaulage ist der Dichtrücken des Dichtelementes auf der Mantelfläche des Befestigungsmittels oder des Trägerteils positioniert. Die zugehörigen radial ausgerichteten gespreizten Dichtlippen sind dabei einerseits an der Stützscheibe oder unmittelbar, beispielsweise an einem Schraubenkopf des Befestigungsmittels und andererseits an der Wandung der Ausnehmung des Lagerauges abgestützt. Diese Einbaulage des Dichtelementes kompensiert insbesondere ein sich einstellendes Einbauspiel zwischen dem Lagerauge und den Stützscheiben des Trägerteils.

Eine zweite Einbaulage des Dichtelementes sieht vor, dass dessen Dichtrücken an der Wandung der Lageraugen-Ausnehmung anliegt. Die zugehörigen axial ausgerichteten gespreizten Dichtlippen sind in der Einbaulage unter Vorspannung an der Mantelfläche des Befestigungsmittels oder des Trägerteils und außenseitig an der Wandung der Lageraugen-Ausnehmung positioniert. Mit dieser Dichtelement-Einbaulage kann insbesondere ein Lagerspiel zwischen dem Befestigungsmittel oder dem Trägerteil und dem Lagerauge kompensiert werden.

Eine definierte Einbaulage des Dichtelementes, dessen Dichtrücken sich weitestgehend an der radial ausgerichteten Wandung der Lageraugen-Ausnehmung abstützt sieht vor, dass die innere Dichtlippen vollflächig die Mantelfläche des Trägerteils oder des Befestigungsmittels umschließt. Diese Maßnahme bewirkt einen sich über die gesamte Länge der Dichtlippe erstreckende Dichtfläche. Die Dichtwirkung ist dabei insbesondere durch die Vorspannkraft beeinflussbar, mit der der Dichtrücken sowie die innere Dichtlippe das Trägerteil oder das Befestigungsmittel umschließt. Die zugehörige äußere Dichtlippe des Dichtelementes kann dabei mit einem vergrößerten Anstellwinkel zum Dichtrücken an der Ausnehmung des Lagerauges abgestützt werden.

Eine weitere erfindungsgemäße Maßnahme sieht eine asymmetrische Anordnung der Dichtlippen des Dichtelementes vor. Dazu zählt beispielsweise eine unterschiedliche Länge der Dichtlippen, wodurch die jeweilige Dichtlippe an bauliche Verhältnisse der Bauteile angepasst werden kann, an denen diese im eingebauten Zustand abgestützt ist. Unabhängig von der Länge der Dichtlippen kann die jeweilige Abstützkraft durch einen entsprechend ausgewählten Anstellwinkel oder Wandstärkenverlauf der Dichtlippen beeinflusst werden.

Als geeigneter Werkstoff für das erfindungsgemäße Dichtelement eignet sich bevorzugt ein Elastomer, insbesondere NBR oder HNBR. Weiterhin kann als Werkstoff Fluor-Kautschuk, wie beispielsweise FPM oder FKW eingesetzt werden. Unabhängig von den zuvor genannten Dichtwerkstoffen wird eine Werkstoffauswahl mit einer Härte von ≤ 75 Shore A bevorzugt.

Der Aufbau des erfindungsgemäßen Lagerauges schließt als Radiallager bevorzugt zwei axial getrennt in dem Ringspalt eingesetzte Gleitlagerbuchsen ein. Die Einbaulage der Gleitlagerbuchsen sieht dabei vor, dass diese bündig bis zur stirnseitigen Ausnehmung der Lageraugen geführt sind, die zur Aufnahme des Dichtelementes bestimmt sind.

### Kurze Beschreibung der Zeichnungen

Nachfolgend die Erläuterung von Ausführungsbeispielen der Erfindung. Es zeigen:
- Figur 1: in einer Schnittdarstellung den Aufbau eines Lagerauges für ein Spannsystem in Verbindung mit einem erfindungsgemäßen Dichtelement;
- Figur 2: ein Lagerauge gemäß Figur 1 mit einem alternativ gestalteten Dichtelement;
- Figur 3: ein Spannsystem bekannter Bauart in Verbindung eines Lagerau- ges.

### Detaillierte Beschreibung der Zeichnungen

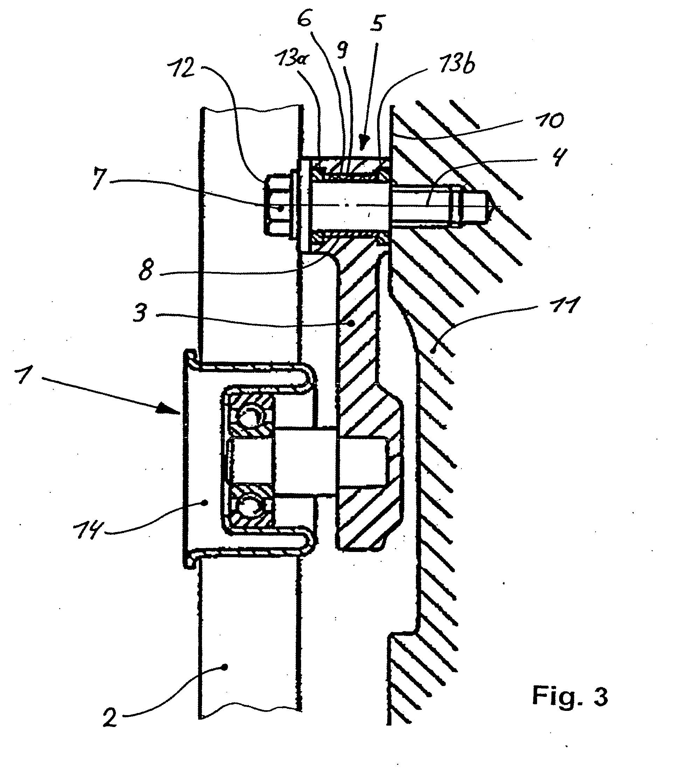

Zunächst wird die Figur 3 beschrieben, in der ein bekannter Stand der Technik dargestellt ist. Die Figur 3 zeigt ein Spannsystem 1, mit dem ein Zugmittel 2 eines ansonsten nicht dargestellten Zugmitteltriebs vorgespannt wird. Das Spannsystem 1 umfasst einen Schwenkhebel 3, welcher um eine ortsfeste Drehachse 4 schwenkbar ist. Im Bereich der Drehachse 4 bildet der Schwenkhebel 3 ein Lagerauge 5. Dazu ist der Schwenkhebel 3 mit einer Längsbohrung 6 versehen, die zur Aufnahme eines als Schraube ausgebildeten Befestigungsmittel 7 bestimmt ist. Ein sich zwischen der Längsbohrung 6 und dem Befestigungsmittel 7 bildender Ringspalt 8 ist zur Aufnahme einer Gleitlagerbuchse 9 bestimmt, die ein Radiallager bildet und eine reibungsarme Verstellung des Schwenkhebels 3 sicherstellt. Im Einbauzustand stützt sich der Schwenkhebel 3 einerseits an einer Stirnfläche 10 eines ortsfesten Maschinenteils 11 ab, beispielsweise dem Gehäuse einer Brennkraftmaschine und gegenseitig an einem Schraubenkopf 12 des Befestigungsmittels 7. Zur Abdichtung des Ringspalts 8 innerhalb des Lagerauges 5 ist beiden Endseiten der Gleitlagerbuchse 9 zur Abdichtung ein O-Ring 13a, 13b zugeordnet. An dem vom Lagerauge 5 abgewandten Ende ist der Schenkhebel 3 mit einer Laufrolle 14 verbunden, die im Einbauzustand in Verbindung mit einem in Figur 3 nicht abgebildeten Federmittel kraftschlüssig an dem Zugmittel 2 anliegt.

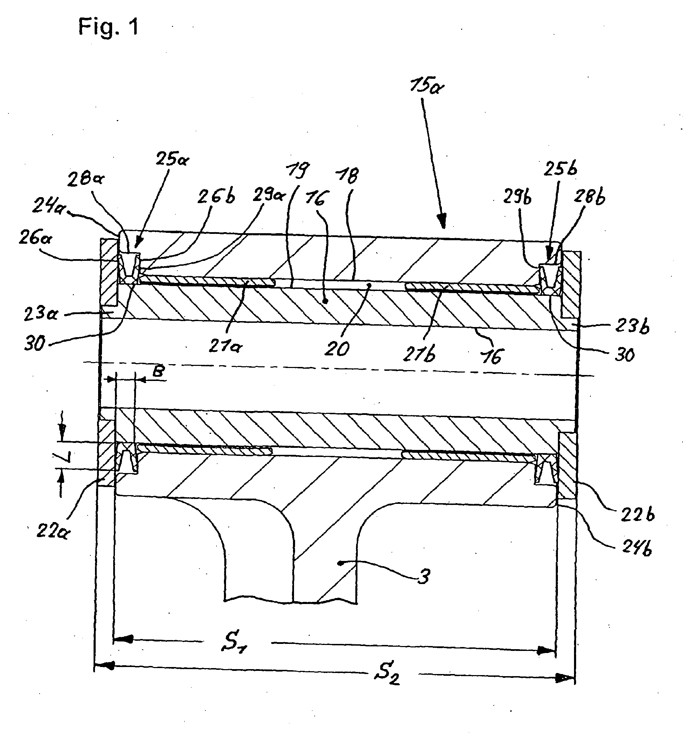

Die Figur 1 zeigt in einer vergrößerten Darstellung ein Lagerauge 15a, das zusätzlich zu dem in Figur 3 abgebildeten Lagerauge 5 ein Trägerteil 16 einschließt. Eine Bohrung 17 des Trägerteils 16 dient zur Aufnahme eines in Figur 1 nicht abgebildeten Befestigungsmittels mit dem das Trägerteil 16 im Einbauzustand dreh- und lagefixiert ist. Das Trägerteil 16 ist dabei in eine Längsbohrung 18 des Lagerauges 15a eingesetzt. Ein radial von einer Mantelfläche 19 des Trägerteils 16 und der Längsbohrung 18 begrenzter Ringspalt 20 ist zur Aufnahme von zwei axial getrennt zueinander angeordneten Gleitlagerbuchsen 21 a, 21 b bestimmt, die das Radiallager bilden. Eine Breite "S₂" des Trägerteils 16 übertrifft dabei eine Breite "S₁" des Lagerauges 15a. Ein beidseitiges Überstandsmaß des Trägerteils 16 dient zur Aufnahme und Fixierung jeweils einer Stützscheibe 22a, 22b. Jede auf einem axial vorstehenden Ansatz 23a, 23b zentrierte Stützscheibe 22a, 22b erstreckt sich radial nahezu über die gesamte Stirnfläche 24a, 24b des Lagerauges 15a. Zur Abdichtung des Ringspaltes 20 umfasst das Lagerauge 15a zwei endseitig eingesetzte Dichtelemente 25a, 25b. Das jeweils zwei radial ausgerichtete Dichtlippen 26a, 26b umfassende Dichtelement 25a, 25b umschließt dazu mit einem Dichtrücken 30 die Mantelfläche 19 des Trägerteils 16. Zur Aufnahme der Dichtelemente 25a, 25b weist das Lagerauge 15a jeweils im Bereich der Stirnflächen 24a, 24b einen rechteckförmig gestalteten Einbauraum 28a, 28b auf. Im Einbauzustand des Dichtelementes 25a, 25b sind die gegensätzlich gespreizten Dichtlippen 26a, 26b unter Vorspannung an der Stützscheibe 22a, 22b bzw. an einer Wandung 29a, 29b des Einbauraums 28a, 28b abgestützt. Zur Erzielung hochelastisch wirkender Dichtlippen 26a, 26b sind diese deutlich länger ausgebildet als ein zugehöriger Dichtrücken 30 des Dichtelementes 25a, 25b. Zur Verdeutlichung übertrifft eine Länge "L" der Dichtlippen 26a, 26b eine Breite "B" des Dichtrückens 30 um den Faktor ≥ 1,2.

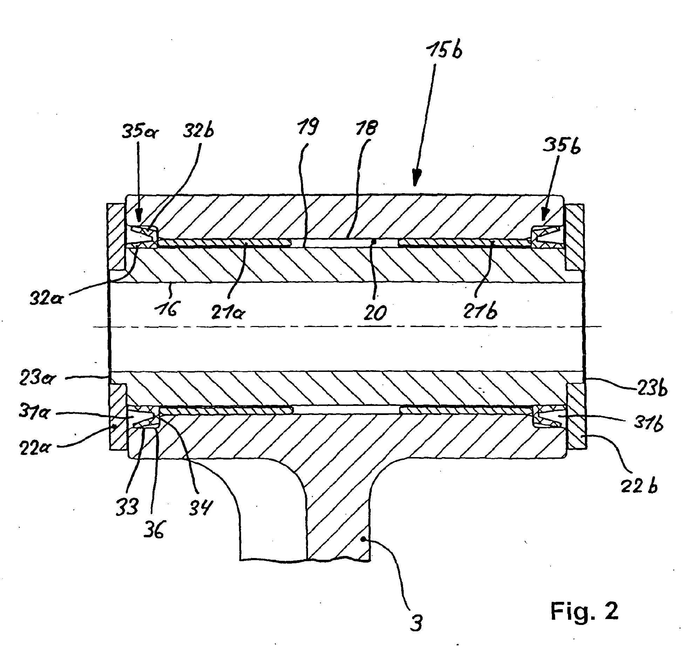

Das in Figur 2 abgebildete Lagerauge 15b stimmt weitestgehend überein mit dem Lagerauge 15a gemäß Figur 1, so dass sich die nachfolgende Beschreibung auf die Unterschiede beschränkt. Der Einbauraum 31a, 31b ist in dem Lagerauge 15b so angeordnet, dass die Dichtlippen 32a, 32b des Dichtelementes 35a, 35b axial ausgerichtet sind und im Einbauzustand unter Vorspannung an der Mantelfläche 19 des Trägerteils 16 und außenseitig an einer Wandung 33 des Einbauraums 31 a, 31b abgestützt sind. Dabei ist der Dichtrücken 34 des Dichtelementes 35a, 35b an einer Stufe 36 des Lagerauges 15b im Bereich des Einbauraums 31a, 31b abgestützt. Zur Erzielung einer verbesserten Abdichtung bietet es sich an, eine Einbaulage des Dichtelementes 35a, 35b zu wählen, bei der die inneren Dichtlippen 32a vollflächig an der Mantelfläche 19 des Trägerteils 16 anliegen. Damit stellt sich eine unterschiedliche Einbaulage bzw. Abstützung der Dichtlippen 32a, 32b ein. Neben dieser abweichenden Einbaulage schließt die Erfindung weiterhin voneinander abweichende Längen der Dichtlippen 32a, 32b der Dichtelemente 35a, 35b ein oder einen sich unterscheidenden Wandstarkenverlauf der Dichtlippen eines Dichtelementes.

### Bezugszahlen

- 1: Spannsystem
- 2: Zugmittel
- 3: Schwenkhebel
- 4: Drehachse
- 5: Lagerauge
- 6: Längsbohrung
- 7: Befestigungsmittel
- 8: Ringspalt
- 9: Gleitlagerbuchse
- 10: Stirnfläche
- 11: Maschinenteil
- 12: Schraubenkopf
- 13a: Dichtring
- 13b: Dichtring
- 14: Laufrolle
- 15a: Lagerauge
- 15b: Lagerauge
- 16: Trägerteil
- 17: Bohrung
- 18: Längsbohrung
- 19: Mantelfläche
- 20: Ringspalt
- 21a: Gleitlagerbuchse
- 21b: Gleitlagerbuchse
- 22a: Stützscheibe
- 22b: Stützscheibe
- 23a: Ansatz
- 23b: Ansatz
- 24a: Stirnfläche
- 24b: Stirnfläche
- 25a: Dichtelement
- 25b: Dichtelement
- 26a: Dichtlippe
- 26b: Dichtlippe
- 28a: Einbauraum
- 28b: Einbauraum
- 29a: Wandung
- 29b: Wandung
- 30: Dichtrücken
- 31 a: Einbauraum 31 b Einbauraum
- 32a: Dichtlippe
- 32b: Dichtlippe
- 33: Wandung
- 34: Dichtrücken
- 35a: Dichtelement
- 35b: Dichtelement
- 36: Stufe

## Patentansprüche

1. Lagerauge für ein in Zugmitteltrieben eingesetztes Spannsystem (1), das einstückig mit einem Schwenkhebel (3) verbunden ist, der endseitig eine an einem Zugmittel (2) abgestützte Laufrolle (14) einschließt, wobei das Lagerauge (5; 15a, 15b) gegenüber einem ortsfesten, in einer Längsbohrung (6) des Lagerauges (5) geführten Befestigungsmittel (7) drehbar ist und dazu in einem mittelbar oder unmittelbar von einer Innenwandung der Längsbohrung (6) und einer Mantelfläche eines Trägerteils (16) oder des Befestigungsmittels (7) radial begrenzten Ringspalt (8) zumindest eine als Radiallager ausgelegte Gleitlagerbuchse (9) eingesetzt ist und der Ringspalt (8) beidseitig abgedichtet ist, **dadurch gekennzeichnet, dass** zur Abdichtung des Ringspaltes (20) beidseitig des Lagerauges (15a, 15b) ein hochelastisches, zumindest zwei Dichtlippen (26a, 26b; 32a, 32b) einschließendes, in einem rechteckförmig gestalteten Einbauraum (28a, 28b; 31a, 31 b) des Lagerauges (15a, 15b) integriertes Dichtelement (25a, 25b; 35a, 35b) vorgesehen ist, wobei das Dichtelement (25a, 25b; 35a, 35b) von einem Dichtrücken (30, 34) ausgehend, zwei entgegengesetzt gespreizte Dichtlippen (26a, 26b; 32a, 32b) umfasst und eine Länge (L) der Dichtlippen eine Breite (B) des Dichtrückens von dem Dichtelement um einen Faktor ≥ 1,2 übertrifft.

2. Lagerauge nach Anspruch 1, das ein rohrförmig gestaltetes, über das Befestigungsmittel (7) lagefixiertes Trägerteil (16) einschließt, dessen Breite (S₂) eine Breite (S₁) des Lagerauges (15a) übertrifft und jeweils endseitig an dem Trägerteil (16) positionierte Stützscheiben (22a, 22b) sich radial über den Ringspalt (20) sowie den Einbauraum (28a, 28b; 31 a, 31 b) erstrecken.

3. Lagerauge nach Anspruch 1, dass in einer Übergangszone zwischen der Längsbohrung (18) und einer Stirnfläche (24a, 24b) des Lagerauges (15a, 15b) jeweils ein stufenartig gestalteter, für das Dichtelement (25a, 25b; 35a, 35b) bestimmter umlaufender Einbauraum (28a, 28b; 31 a, 31 b) vorgesehen ist.

4. Lagerauge nach Anspruch 1, bei dem der Dichtrücken (30) des Dichtelementes (25a, 25b) auf der Mantelfläche (19) des Trägerteils (16) positioniert ist und deren radial ausgerichtete Dichtlippen (26a, 26b) an der Stützscheibe (22a, 22b) bzw. einer Wandung (29a, 29b) des Einbauraums (28a, 28b) abgestützt sind.

5. Lagerauge nach Anspruch 1, dessen Dichtelement (35a, 35b) mit dem Dichtrücken (34) an einer Stirnseite des Einbauraums (31a, 31b) des Lagerauges (15b) anliegt und deren axial ausgerichtete Dichtlippen (32a, 32b) innenseitig an der Mantelfläche (19) des Trägerteils (16) und außenseitig an einer parallel zur Mantelfläche (19) des Trägerteils (16) verlaufenden Wandung (33) im Bereich des Einbauraums (31a, 31b) abgestützt sind.

6. Lagerauge nach Anspruch 5, bei dem das Dichtelement (35a, 35b) mit der inneren Dichtlippe (32a) vollflächig an der Mantelfläche (19) des Trägerteils (16) anliegt.

7. Lagerauge nach Anspruch 1, dessen Dichtelement (35a, 35b) eine asymmetrische Anordnung der Dichtlippen (32a, 32b) einschließt.

8. Lagerauge nach Anspruch 1, bei dem die Dichtelemente (25a, 25b; 35a, 35b) aus einem Elastomer, insbesondere NBR oder HNBR hergestellt sind.

9. Lagerauge nach Anspruch 1, das zwei axial zueinander getrennt angeordnete, das Radiallager bildende Gleitlagerbuchsen (21a, 21b) einschließt.

## Claims

1. Bearing eye for a tensioning system (1) used in flexible drives which is integrally connected to a pivoted lever (3) which on the end face encompasses a roller (14) supported on a traction mechanism (2), the bearing eye (5; 15a, 15b) being rotatable relative to a fixed fastening means (7) guided in a longitudinal bore (6) of the bearing eye (5) and to this end at least one plain bearing bush (9) designed as a radial bearing being inserted in an annular gap (8) radially defined indirectly or directly by an inner wall of the longitudinal bore (6) and a peripheral surface of a support part (16) or the fastening means (7), and the annular gap (8) being sealed on both sides, **characterized in that** for sealing the annular gap (20) on both sides of the bearing eye (15a, 15b) a highly resilient sealing element (25a, 25b; 35a, 35b) is provided encompassing at least two sealing lips (26a, 26b; 32a, 32b) incorporated in a rectangular installation space (28a, 28b; 31a, 31b) of the bearing eye (15a, 15b), the sealing element (25a, 25b; 35a, 35b) comprising two mutually spread-apart sealing lips (26a, 26b; 32a, 32b) extending from the back of the seal (30, 34), and a length (L) of the sealing lips exceeds a width (B) of the back of the seal of the sealing element by a factor of ≥ 1.2.

2. Bearing eye according to Claim 1, which encompasses a tubular support part (16), fixed in position by the fastening means (7), the width (S₂) thereof exceeding a width (S₁) of the bearing eye (15a) and support discs (22a, 22b) positioned at the end face on the support part (16) extending radially over the annular gap (20) as well as the installation space (28a, 28b; 31a, 31b).

3. Bearing eye according to Claim 1, in that in a transition zone between the longitudinal bore (18) and a front face (24a, 24b) of the bearing eye (15a, 15b) one respective step-like peripheral installation space (28a, 28b; 31a, 31b) is provided, intended for the sealing element (25a, 25b; 35a, 35b).

4. Bearing eye according to Claim 1, in which the back of the seal (30) of the sealing element (25a, 25b) is positioned on the peripheral surface (19) of the support part (16) and the radially aligned sealing lips (26a, 26b) thereof are supported on the support disc (22a, 22b) and/or a wall (29a, 29b) of the installation space (28a, 28b).

5. Bearing eye according to Claim 1, the sealing element (35a, 35b) thereof bearing with the back of the seal (34) against a front face of the installation space (31a, 31b) of the bearing eye (15b) and the axially aligned sealing lips (32a, 32b) thereof being supported on the inside on the peripheral surface (19) of the support part (16) and externally on a wall (33) extending parallel to the peripheral surface (19) of the support part (16) in the region of the installation space (31a, 31b).

6. Bearing eye according to Claim 5, in which the sealing element (35a, 35b) bears with the inner sealing lip (32a) against the entire area of the peripheral surface (19) of the support part (16).

7. Bearing eye according to Claim 1, the sealing element (35a, 35b) thereof encompassing an asymmetrical arrangement of the sealing lips (32a, 32b).

8. Bearing eye according to Claim 1, in which the sealing elements (25a, 25b; 35a, 35b) are produced from an elastomer, in particular NBR or HNBR.

9. Bearing eye according to Claim 1, which encompasses two plain bearing bushes (21a, 21b) forming the radial bearing and arranged axially separated from one another.

## Revendications

1. Bossage de support pour un système de serrage (1) inséré dans un entraînement à élément de traction, qui est connecté d'une seule pièce à un levier pivotant (3), qui renferme du côté de son extrémité un galet de roulement (14) supporté sur un élément de traction (2), le bossage de support (5 ; 15a, 15b) pouvant tourner par rapport à un moyen de fixation (7) fixe, guidé dans un alésage longitudinal (6) du bossage de support (5), et à cet effet au moins un manchon de palier lisse (9) réalisé sous forme de palier radial étant inséré dans une fente annulaire (8) limitée radialement indirectement ou directement par une paroi intérieure de l'alésage longitudinal (6) et par une surface d'enveloppe d'une partie de support (16) ou du moyen de fixation (7) et la fente annulaire (8) étant étanchée des deux côtés, **caractérisé en ce que** pour l'étanchéité de la fente annulaire (20) de chaque côté du bossage de support (15a, 15b), on prévoit un élément d'étanchéité (25a, 25b ; 35a, 35b) de grande élasticité, comprenant au moins deux lèvres d'étanchéité (26a, 26b ; 32a, 32b), et intégré dans un espace de montage (28a, 28b ; 31a, 31b) du bossage de support (15a, 15b) configuré sous forme rectangulaire, l'élément d'étanchéité (25a, 25b ; 35a, 35b), partant d'un dos d'étanchéité (30, 34), comprenant deux lèvres d'étanchéité (26a, 26b ; 32a, 32b) écartées en sens inverse, et une longueur (L) des lèvres d'étanchéité dépassant une largeur (B) du dos d'étanchéité de l'élément d'étanchéité d'un facteur ≥ 1,2.

2. Bossage de support selon la revendication 1, qui renferme une partie de support (16) fixée en position par le biais du moyen de fixation (7) et configurée sous forme tubulaire, dont la largeur (S₂) dépasse une largeur (S₁) du bossage de support (15a), des disques de support (22a, 22b) positionnés à chaque fois du côté de l'extrémité sur la partie de support (16) s'étendant radialement sur la fente annulaire (20) ainsi que l'espace de montage (28a, 28b ; 31a, 31b).

3. Bossage de support selon la revendication 1, **caractérisé en ce que** dans une zone de transition entre l'alésage longitudinal (18) et une surface frontale (24a, 24b) du bossage de support (15a, 15b) est prévu à chaque fois un espace de montage (28a, 28b ; 31a, 31b) périphérique de configuration étagée, prévu pour l'élément d'étanchéité (25a, 25b ; 35a, 35b).

4. Bossage de support selon la revendication 1, dans lequel le dos d'étanchéité (30) de l'élément d'étanchéité (25a, 25b) est positionné sur la surface d'enveloppe (19) de la partie de support (16) et ses lèvres d'étanchéité orientées radialement (26a, 26b) sont supportées sur le disque de support (22a, 22b) ou sur une paroi (29a, 29b) de l'espace de montage (28a, 28b).

5. Bossage de support selon la revendication 1, dont l'élément d'étanchéité (35a, 35b) s'applique avec le dos d'étanchéité (34) contre un côté frontal de l'espace de montage (31a, 31b) du bossage de support (15b) et dont les lèvres d'étanchéité orientées axialement (32a, 32b) sont supportées du côté intérieur contre la surface d'enveloppe (19) de la partie de support (16) et du côté extérieur contre une paroi (33) s'étendant parallèlement à la surface d'enveloppe (19) de la partie de support (16) dans la région de l'espace de montage (31a, 31b).

6. Bossage de support selon la revendication 5, dans lequel l'élément d'étanchéité (35a, 35b) s'applique avec la lèvre d'étanchéité intérieure (32a) sur toute sa surface contre la surface d'enveloppe (19) de la partie de support (16).

7. Bossage de support selon la revendication 1, dont l'élément d'étanchéité (35a, 35b) inclut un agencement asymétrique des lèvres d'étanchéité (32a, 32b).

8. Bossage de support selon la revendication 1, dans lequel les éléments d'étanchéité (25a, 25b ; 35a, 35b) sont fabriqués en un élastomère, notamment du NBR ou du HNBR.

9. Bossage de support selon la revendication 1, qui renferme deux manchons de palier lisse (21a, 21b) formant le palier radial et séparés axialement l'un de l'autre.
